Europäisches Patentamt

(19) European Patent Office

Office européen des brevets

(11) Publication number: **0 057 100**
**B1**

(12) **EUROPEAN PATENT SPECIFICATION**

(45) Date of publication of patent specification: **02.01.85**

(21) Application number: **82300364.5**

(22) Date of filing: **25.01.82**

(51) Int. Cl.⁴: **G 01 L 5/10, G 01 L 1/14**

(54) **Tension load transducer.**

(30) Priority: **26.01.81 US 228440**

(43) Date of publication of application:
**04.08.82 Bulletin 82/31**

(45) Publication of the grant of the patent: ·
**02.01.85 Bulletin 85/01**

(84) Designated Contracting States:
**AT BE CH DE FR GB IT LI NL SE**

(56) References cited:
**FR-A-2 270 567**
**US-A-3 142 981**
**US-A-3 290 931**

(73) Proprietor: **DEERE & COMPANY**
**1 John Deere Road**
**Moline Illinois 61265 (US)**

(72) Inventor: **Jackson, Jeffrey Alan**
**1619 West Church**
**Champaign Illinois 61820 (US)**
Inventor: **Espiritu Santo, Eugenio**
**1720 Cottage Lane**
**Cedar Falls Iowa 50613 (US)**
Inventor: **Kluge, Douglas Jacob**
**7979 Jonellen Lane**
**Golden Valley Minnesota 55427 (US)**
Inventor: **Kittle, Carl Edwin**
**2312 Primrose**
**Cedar Falls Iowa 50613 (US)**
Inventor: **Bluem, Gary Raymond**
**200 Black Oaks Lane**
**Wayzata Minnesota 55391 (US)**

(74) Representative: **Pears, David Ashley et al**
**REDDIE & GROSE 16 Theobalds Road**
**London WC1X 8PL (GB)**

Courier Press, Leamington Spa, England.

EP 0 057 100 B1

## Description

This invention relates to a tension load transducer for measuring the amount of tension in a linkage. The transducer comprises a resiliently deformable open frame structure having two opposite attachment points, and formed by spaced limbs extending between the attachment points, and a capacitor spanning the limbs providing a signal indicative of the movement together of the limbs caused by applying tension to the frame structure between the attachment points.

Such a transducer is known from US—A—3 142 981. The known transducer employs a sliding vane type of capacitor with plates rigidly attached to the respective limbs. Such a capacitor is unsuited to the environment in which a tension load transducer commonly has to operate, e.g. in the draft linkage of a tractor. Moreover, the rigid attachment of the plates leads to undesirable frictional forces within the capacitor. US—A—3 073 155 has a dial gauge between the limbs of a diamond shaped framework. US—A—2 520 923 also has a diamond framework but employs a resistance strain gauge on a strut spanning the two limbs while a like arrangement is employed in a ring framework in US—A—2 550 588. Resistance strain gauges suffer from lack of sensitivity, temperature stability and durability.

The object of the present invention is to provide an improved transducer which does not suffer from these defects while preserving the advantage of these framework transducers, namely the ability to withstand and measure very large tension loads, e.g. tractor draft loads.

This invention is characterised in that the capacitor spanning the limbs comprises first and second capacitor plates pivotally mounted on the two limbs respectively and so constrained as to maintain a constant mutual orientation with variation of the spacing only between the plates as the limbs move together.

Other draft load and weight transducers working on the capacitive principle are known per se, e.g. from US—A—3 995 695 and US—A—3 290 931 but such known transducers cannot provide the required sensitivity and stability at reasonable cost. E.g. US—A—3 995 695 uses a differential, three-plate capacitor and is generally complex. The present invention needs only two plates which can be mounted simply as indicated by the features set forth in the dependent claims while preserving the required accuracy of output. US—A—3 290 931 effectively measures the extension of a loaded frame in terms of the increasing separation of capacitor plates whereas the present invention enables capacitor plates to be used in the type of transducer defined in the introductory paragraph above without problems arising from changes in orientation of the plates as the limbs deform.

A signal conditioning circuit which utilizes a commercially available voltage-to-frequency which is proportional to the tension applied to the transducer.

The invention will be described in more detail, by way of example, with reference to the accompanying drawings, in which:

Fig. 1 is a partial cross-sectional view of a draught sensor embodying the invention.

Fig. 2 is a cross-sectional view of the draught sensor along lines 2—2 of Fig. 1;

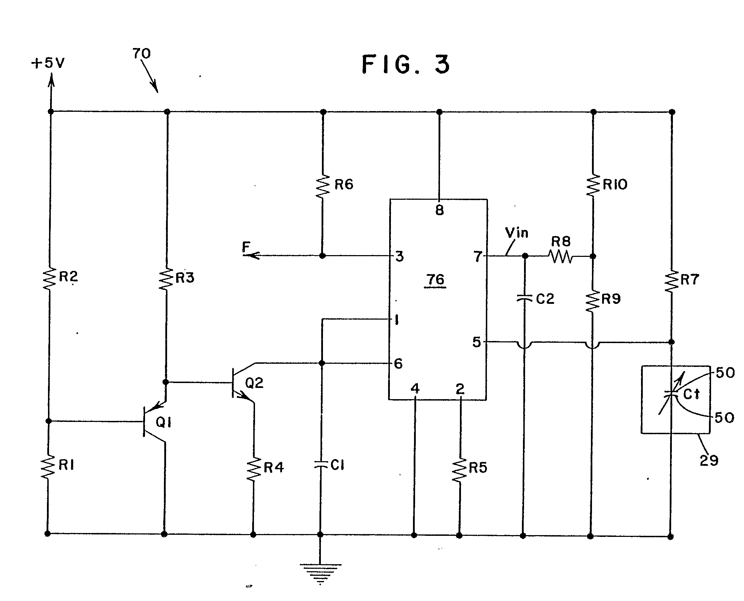

Fig. 3 is a circuit diagram of a signal conditioning circuit which may be used with the sensor.

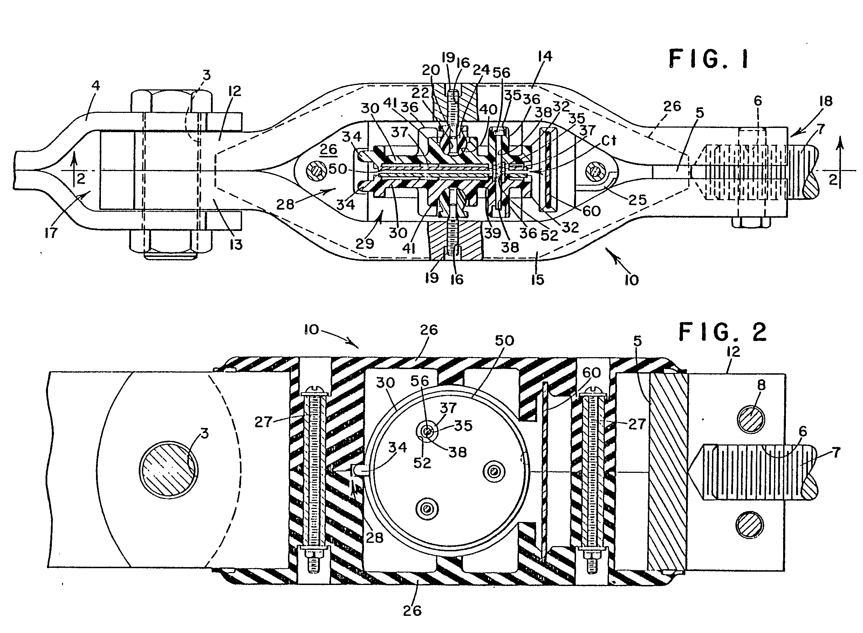

Referring to Figs. 1 and 2, a tension load transducer 10 is a draught sensor which includes a pair of deformable members 12 and 13 forming an open framework. Linkages 4 and 7 may be attached to opposite ends 17 and 18 of the device 10 so that the longitudinal tension in the linkages may be measured by the device 10. A bore 3 extends through end 17 so that a linkage 4 may be bolted thereto. A space is maintained in the end 18 by a spacer 5. A threaded bore 6, for receiving the other linkage 7, extends into the spaced end 18. The split ends of end 18 are clamped together by bolts 8 to tightly grip the linkage 7 in the threaded bore 6. Deformable members 12 and 13 include laterally spaced-apart central limbs 14 and 15, each with a centrally positioned threaded bore 16 extending laterally therethrough. Each bore 16 receives an adjusting screw 19. The reduced diameter inner ends 20 of the adjusting screws 19 are slip-fits into bores 22 which extend through spherical ball members 24.

A pair of identical rubber boots or seals 26 may be secured together by bolts 27 to enclose the volume circumscribed by the spaced-apart central limbs 14 and 15 and to protect the enclosed volume from contamination from the environment. A groove 25 in the boots provides an exit path for an electrical cable (not shown) from a circuit board 60. As best seen in Fig. 2, the boots 26 include a complimentary pair of recesses which cooperate to define an alignment notch 28.

A capacitive transducer 29 is carried in the volume enclosed by the central limbs 14 and 15 and the rubber boots 26. The transducer 29 includes a pair of identical, generally disc-shaped, electrically insulating supports 30 which may be formed of an insulating plastics material. Each support 30 includes a raised rim 32 with an alignment tab 34 extending radially from the outer peripheral surface thereof. Each support 30 also includes three evenly distributed larger raised cylindrical necks 36 (two of which are shown in Fig. 1) extending from the outwardly facing side thereof. Each support 30 also includes three smaller necks 37 (two of which are shown in Fig. 1) extending from the inwardly facing side thereof an axial alignment with necks 36. Alignment bores extend laterally through the supports 30 and the necks 36 and 37. Each bore includes a smaller diameter portion 38 interconnecting larger diameter portions 35. Each inwardly located larger diameter bore portion 35 receives a compression spring 39 which is biased to urge the supports 30 apart. Each support 30 also includes a central raised cylindrical portion 41 on the side outwardly facing thereof. Each central raised portion includes a spherical socket 40 formed therein for pivotally receiving a corresponding one of the ball members 24 so that the supports 30 can pivot relative to their corresponding central portions 14 and 15. The adjusting screws 18 can be turned manually to adjust the spacing between the supports 30.

A pair of generally disc-shaped electrically conducting plates 50 are mounted by any suitable manner for movement with the supports 30. Each plate 50 includes three clearance bores 52, one of which is shown in Fig. 1, for lining up with the alignment bores 38 in the supports 30 and for registering with the corresponding small necks 37 of the support 30 to prevent rotation of the plates 50. Three alignment pins 56 extend through bore portions 35, 38 and 52 and slidably engage the walls of the smaller diameter portions 38 of the alignment bores in the supports 30. The alignment pins 56 cooperate with the walls of the bore portions 38 to maintain a parallel relationship between the plates 50. The plates 50 form the plates of a parallel plate variable capacitor Ct, the capacitance of which varies as a function of the separation between central portions 14 and 15 of deformable members 12 and 13, and this, as a function of the longitudinal tension applied to ends 17 and 18 of the sensor 10.

A circuit board 60 is supported by the rubber boots 26 in a position adjacent the transducer 29 and between the central portions 14 and 15 of the deformable members 12 and 13. The circuit 70 is assembled on the circuit board 60, with the exception of the variable capacitor Ct.

A resistor R1 is coupled between ground and the base of a grounded collector transistor Q1. A resistor R2 couples the base of Q1 to a regulated D.C. supply of +5 volts. A resistor R3 couples the emitter of Q1 to +5 volts. The emitter of Q1 is also coupled to the base of transistor Q2. A resistor R4 couples the emitter of Q2 with ground. The collector of Q2 is coupled to ground via capacitor C1 and is coupled to pins 1 and 6 of voltage-to-frequency (V/F) converter 76, such as National Semiconductor's LM231A. For a detailed description of the operation of V/F converter 76, the reader is referred to the manufacturer's specification literature for the LM231A.

Pin 2 of converter 76 is grounded via resistor R5. Pin 3 is connected to +5 volts via resistor R7 and is coupled to ground via variable capacitor Ct of transducer 29. Pin 7 is coupled to ground via capacitor C2. Pin 7 is also coupled to ground via series connected resistors R8 and R9 and is coupled to +5 volts via series connected resistors R8 and R9 and is coupled to +5 volts via series connected resistors R8 and R10. Pin 8 is coupled to +5 volts.

The circuit 70 is similar to a circuit suggested in the specification literature for the LM 231A V1F converter. As described in that literature, the converter 76 generates a square wave output signal at pin 3 with a frequency F defined by the equation:

$$F \sim L/(R7 \times Ct) \qquad (1)$$

The lateral separation between the central portions 14 and 15 of the deformable members 12 and 13 is proportional to the amount of longitudinal tension applied to ends 17 and 18 tending to pull the ends part. The plates 50 of variable capacitor Ct move with their respective central portions 14 and 15 and thus, the separation d, between the plate 50, may be described by the following equation:

$$d \sim k_1 \times T, \qquad (2)$$

where T is the tension and $k_1$ is a constant.

It is well known that the capacitance Ct of a closely spaced parallel plate capacitor is defined by the equation:

$$Ct = (\varepsilon s) \div d, \qquad (3)$$

where $\varepsilon$ is the permittivity of the dialectric between the plates 50 and s is the area of the plates.

Combining and rearranging equations (1), (2) and (3), we derive:

$$F \sim T \times (k_1/(R7 \times \varepsilon \times s))$$

Thus, since the bracketed term $(k_1/(R7 \times \varepsilon \times s))$ is a constant, the sensor 10 and the circuit 70 cooperate to generate an output signal at pin of V/F converter 76 with a frequency F which is directly proportional to the tension T.

Pin 6 of V/F converter 76 provides for a threshhold input to a comparator amplifier (not shown) which is included in the converter 76. If the level of this threshold input is uncompensated for temperature variations, then the output frequency F will be undesirably dependent upon the temperature of the converter 76.

We have provided temperature compensation for improving the operation of the basic circuit suggested in the LM231A specification literature. This improvement comprises the addition of transistors Q1 and Q2 as previously described. Transistors Q1 and Q2 are temperature sensitive. Their respective gains vary with changes in temperature to vary the D.C. level of the threshold voltage applied to pin 6 to compensate for temperature variations within the converter 76.

## Claims

1. A tension load transducer comprising a resiliently deformable open frame structure having two opposite attachment points, and formed by spaced limbs (14, 15) extending between the attachment points, and a capacitor spanning the limbs providing a signal indicative of the movement together of the limbs caused by applying tension to the frame structure between the attachment points, characterised in that the capacitor spanning the limbs (14, 15) comprises first and second capacitor plates (50) pivotally mounted on the two limbs (14, 15) respectively and so constrained as to maintain a constant mutual orientation with variation of the spacing only between the plates as the limbs move together.

2. A transducer according to claim 1, comprising a plurality of compression springs (39) biasing the plates (50) apart so as to maintain the gap between the plates at the maximum permitted by the separation of the limbs (14, 15).

3. A transducer according to claim 1 or 2, characterised in that each plate (50) is carried by a corresponding insulating support (30).

4. A transducer according to claim 3, characterised in that each support (30) has a socket (40) receiving a ball (26) attached to the corresponding limb (14 or 15).

5. A transducer according to claim 3 or 4, characterised by means (19) for adjusting at least one support (30) relative to the corresponding limb (14 or 15) so as to adjust the gap between the plates (50).

6. A transducer according to claim 3, 4 or 5, comprising a plurality of guide pins (56) extending slidably through the supports.

7. A transducer according to any of claims 1 to 6, characterised by a resilient protective structure (26) enclosing the plates (50) and supports (30) within the volume circumscribed by the frame structure (14, 15).

8. A transducer according to claim 8, characterised in that the resilient protective structure (26) also encloses an electrical circuit (60) connected to the plates (50) and providing an electrical output signal representative of the gap between the plates and hence of the applied tension.

## Revendications

1. Transducteur de force de tension comportant un bâti constitué par un cadre ouvert élastiquement déformable comprenant deux points de fixation opposées et formé par des branches écartées (14, 15) s'étendant entre les points de fixation, et un condensateur disposé les branches et relié à elles, fournissant un signal indicateur du rapprochement des branches dû à l'application d'une tension au bâti en forme de cadre entre les points de fixation, caractérisé en ce que le condensateur s'éten-

dant entre les branches (14, 15) comprend une première et une seconde plaques de condensateur (50) montées de façon pivotante sur les deux branches (14, 15) respectivement et retenues de telle sorte qu'elles conservent la même orientation l'une par rapport à l'autre, avec seulement une variation de l'écartement entre les plaques lors du rapprochement des branches.

2. Transducteur suivant la revendication 1, comportant plusieurs ressorts de compression (39) sollicitant les plaques (50) à l'écart l'une de l'autre de façon à maintenir l'entrefer entre les plaques à la dimension maximum rendue possible par l'écartement des branches (14, 15).

3. Transducteur suivant la revendication 1, ou 2, caractérisé en ce que chaque plaque (50) est portée par un support isolant correspondant (30).

4. Transducteur suivant la revendication 1, caractérisé en ce que chaque support (30) comprend une cuvette (40) recevant une tête sphérique (24) fixée sur la branche correspondante (14 ou 15).

5. Transducteur suuivant la revendication 3 ou 4, caractérisé par des moyens (19) pour régler au moins un support (30) rapport à la branche correspondante (14 ou 15), de façon à régler l'entrefer entre les plaques (50).

6. Transducteur suivant la revendication 3, 4 ou 5, caractérisé en ce qu'il comprend des axes de guidage (56) s'étendant de façon coulissante à travers les supports.

7. Transducteur suivant l'une quelconque des revendications 1 à 6, caractérisé par une protection élastique (26) entourant les plaques (50) et les supports (30) à l'intérieur du volume circonscrit par le bâti en forme de cadre (14, 15).

8. Transducteur suivant la revendication 7, caractérisé en ce que la protection élastique (26) entoure également un circuit électrique (60) connecté aux plaques (50) et fournissant un signal électrique de sortie représentant l'entrefer ou intervalle entre les plaques et par suite la tension appliquée.

## Patentansprüche

1. Spannungslastwandler, welcher eine nachgiebig verformbare offene Rahmenkonstruction mit zwei sich gegenüberliegenden Befestigungspunkten, und welche durch im Abstand angeordnete Glieder (14, 15) gebildet ist, welche sich zwischen den Befestigungspunkten erstrecken, und einen Kondensator umfaßt, der die Glieder überbrückt und eine Signal liefert, das die gemeinsame Bewegung der Glieder anzeigt, welche durch Anlegung von Spannung an die Rahmenkonstruction zwischen den Befestigungspunkten verursacht wird, dadurch gekennzeichnet, daß der Kondensator, der die Glieder (14, 15) überspannt, erste und zweite Kondensatorplatten (50) aufweist, die auf den beiden Gliedern (14, 15) jeweils schwenkbar montiert und so gehalten sind, daß sie eine konstante gegenseitige Orientierung bei Veränderung nur des Abstandes zwischen den Platten, wenn die Glieder sich gemeinsam bewegen, beibehalten.

2. Wandler nach Anspruch 1, welcher mehrere Druckfedern (39) umfaßt, welche die Platten (50) auseinanderdrängen, um so einen Spalt zwischen den Platten auf einem Höchstwert, wie er durch die Trennung der Glieder (14, 15) zugelassen wird, aufrechtzuerhalten.

3. Wandler nach Anspruch 1 oder 2, dadurch gekennzeichnet, daß jede Platte (50) durch ein korrespondierendes isolierendes Stützglied (30) getragen wird.

4. Wandler nach Anspruch 3, dadurch gekennzeichnet, daß jedes Stützglied (30) eine Fassung (40) zur Aufnahme einer Kugel (26) aufweist, die an dem korrespondierenden Glied (14 oder 15) angebracht ist.

5. Wandler nach Anspruch 3 oder 4, gekennzeichnet durch Mittel (19) zum Einjustieren wenigstens eines Stützgliedes (30) gegenuber dem korrespondierenden Glied (14 oder 15), um so den Spalt zwischen den Platten (50) einzujustieren.

6. Wandler nach Anspruch 3, 4 oder 5, welcher eine Mehzahl von Führungstiften (56) umfaßt, die sich verschiebbar durch die Stützglieder erstrecken.

7. Wandler nach irgendeinem der Anspruche 1 bis 6, gekennzeichnet durch eine nachgiebige Schutzkonstruction (26), welche die Platten (50) und die Stützglieder (30) innerhalb des Volumens einschließt, das durch die Rahmenkonstruktion eingeschlossen wird.

8. Wandler nach Anspruch 7, dadurch gekennzeichnet, daß die nachgiebige Schutzkonstruction (26) auch einen elektrischen Kreis (60) einschließt, der mit den Platten (50) verbunden ist und ein elektrisches Ausgangssignal liefert, das repräsentativ für den Spalt zwischen den Platten und folglich für die angewendete Spannung ist.

FIG. 1

FIG. 2

# FIG. 3